# DEMANDE DE BREVET EUROPEEN

(11) **EP 1 857 324 A1**
(43) Date de publication de la demande: **21.11.2007**
(21) Numéro de dépôt: 07290642.3
(22) Date de dépôt: 16.05.2007
(51) Int. Cl.: B60R 5/04

(54) **Ensemble de recouvrement des bagages comprenant une structure médiane**

(30) Priorité: 17.05.2006 FR 0604435
(71) Demandeur: Centre d'etude et de recherche pour l'automobile (CERA), 51100 Reims (FR)
(72) Inventeur: Guenamant, Nicolas, 51100 Reims (FR)
(74) Mandataire: Sayettat, Julien Christian

(57) **Abrégé**

L'invention concerne un ensemble (1) de recouvrement des bagages d'un véhicule automobile, ledit ensemble comprenant :
• une structure (5) médiane, ladite structure comprenant des moyens de fixation (6) au véhicule,
• une pluralité de volets (2) montés successivement en articulation transversale (3) les uns par rapport aux autres de sorte à pouvoir être disposés entre une configuration repliée de rangement et une configuration déployée d'utilisation, le bord avant (4) du volet avant étant solidaire de ladite structure,
• au moins un élément de recouvrement (7), associé à l'avant de ladite structure par l'intermédiaire d'un dispositif d'escamotage (9), de sorte à pouvoir être disposé entre une position escamotée et une position étendue de recouvrement.

## Description

L'invention concerne un ensemble de recouvrement des bagages d'un véhicule automobile.

Il est connu de réaliser un ensemble de recouvrement des bagages d'un véhicule automobile destiné à s'étendre longitudinalement sensiblement entre les sièges arrières et l'arrière du compartiment à bagages dudit véhicule, lesdits sièges arrière étant réglables longitudinalement, et de façon indépendante l'un de l'autre, entre une position avancée et une position reculée, ledit ensemble comprenant une pluralité de volets montés successivement en articulation transversale les uns par rapport aux autres de sorte à pouvoir être disposés selon une configuration repliée de rangement et selon une configuration déployée d'utilisation dans laquelle lesdits volets sont en appui latéral sur des appuis prévus sur les ébénisteries latérales du compartiment à bagages, le bord avant du volet avant étant solidaire d'une structure transversale, ladite structure comprenant des moyens de fixation réversible latéraux destinés à coopérer avec des moyens de fixation réciproques prévus sur lesdites ébénisteries latérales.

Dans la suite de ce descriptif, on entendra par un siège réglable longitudinalement, un siège associé de façon mobile à la structure du véhicule, par exemple selon un système à glissières permettant d'avancer ou de reculer le siège, et/ou un siège dont le dossier est réglable en inclinaison, ces différentes configurations ayant pour effet de réaliser un déplacement sensiblement longitudinal de la partie supérieure de dossier de siège.

L'utilisation de tels volets, présentant une rigidité importante, permet le dépôt d'objets sans fléchissement notable desdits volets, contrairement à ce qui est observé lorsqu'un rideau souple est utilisé en lieu et place desdits volets.

Un agencement tel que décrit ci-dessus permet de masquer, au moyen des volets, la partie s'étendant de la structure à l'arrière du compartiment à bagages.

Une telle réalisation présente néanmoins l'inconvénient de ne pas permettre un recouvrement de la partie s'étendant entre chaque partie supérieure de dossier de siège arrière et la structure, notamment lorsque un réglage longitudinal spécifique est réalisé pour chaque siège.

L'invention a pour but de proposer un ensemble permettant un recouvrement complet du compartiment à bagages, notamment lorsque les sièges arrière sont réglables et réglés de façon différenciée.

A cet effet, l'invention propose un ensemble de recouvrement des bagages d'un véhicule automobile, ledit ensemble comprenant :
- une structure médiane, ladite structure comprenant des moyens de fixation au véhicule,
- une pluralité de volets montés successivement en articulation transversale les uns par rapport aux autres de sorte à pouvoir être disposés entre une configuration repliée de rangement et une configuration déployée d'utilisation, le bord avant du volet avant étant solidaire de ladite structure,
- au moins un élément de recouvrement, associé à l'avant de ladite structure par l'intermédiaire d'un dispositif d'escamotage, de sorte à pouvoir être disposé entre une position escamotée et une position étendue de recouvrement.

De la sorte, on peut réaliser avec un tel ensemble un recouvrement complet du compartiment à bagages, lorsqu'au moins un des sièges arrière est réglable, l'élément de recouvrement s'étendant plus ou moins en fonction de la longueur de recouvrement à réaliser entre le siège et la structure, selon le réglage effectué.

Dans cette description, les termes de positionnement dans l'espace (avant, arrière, longitudinal, transversal, latéral,...) sont pris en référence à l'ensemble disposé dans le véhicule.

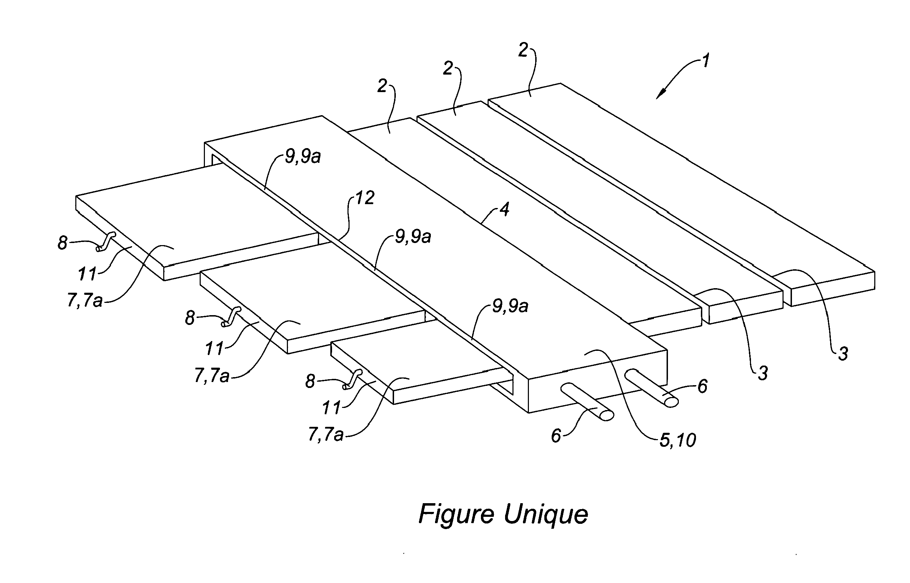

D'autres particularités et avantages de l'invention apparaîtront dans la description qui suit, faite en référence à la figure jointe qui est une représentation schématique en perspective d'un ensemble selon un mode de réalisation de l'invention, les volets étant en position déployée d'utilisation.

En référence à la figure, on décrit à présent un ensemble 1 de recouvrement des bagages d'un véhicule automobile, ledit ensemble comprenant :
- une structure 5 médiane, ladite structure comprenant des moyens de fixation 6 au véhicule,
- une pluralité de volets 2 montés successivement en articulation transversale 3 les uns par rapport aux autres de sorte à pouvoir être disposés entre une configuration repliée de rangement et une configuration déployée d'utilisation, le bord avant 4 du volet avant étant solidaire de ladite structure,
- des éléments de recouvrement 7, associés à l'avant de ladite structure par l'intermédiaire de dispositifs d'escamotage 9, de sorte à pouvoir être disposé entre une position escamotée et une position étendue de recouvrement.

De la sorte, on peut réaliser avec un tel ensemble 1 un recouvrement complet du compartiment à bagages, lorsque les sièges arrière sont réglables et réglés de façon différenciée, chaque élément de recouvrement 7 s'étendant plus ou moins en fonction de la longueur de recouvrement à réaliser entre chaque siège arrière et la structure 5.

Selon la réalisation représentée, les éléments de recouvrement 7 sont disposés de façon contiguë le long de la structure 5, et associés à autant de dispositifs d'escamotage 9, de sorte que lesdits éléments puissent être étendus de façon individuelle tout en assurant un recouvrement complet de l'espace à recouvrir.

Selon la réalisation représentée, les éléments de recouvrement 7 sont sous forme de rideaux 7a.

Les rideaux 7a sont associés à des moyens d'enroulement 9a formant dispositif d'escamotage 9.

Les moyens d'enroulement 9a des rideaux 7a sont logés dans un carter commun 12 associé à la structure 5.

Selon une variante non représentée, au moins un rideau 7a peut être associé à un moyen de pliage, notamment en accordéon, ledit moyen pouvant être formé d'une bande élastique, ramenant ledit rideau en configuration pliée en l'absence de contrainte, ledit moyen formant dispositif d'escamotage 9.

Selon une réalisation non représentée, au moins un élément de recouvrement 7 est sous forme d'un panneau rigide, ledit panneau étant monté sur la structure 5 par des moyens de coulissement, ou selon un axe d'articulation transversal, formant dispositif d'escamotage 9. Dans le cas d'un axe d'articulation, la longueur de recouvrement est assurée par un positionnement du panneau selon un angle plus ou moins important par rapport à l'horizontale.

Selon la réalisation représentée, les éléments de recouvrement 7 comprennent des moyens d'association 8 de leur bord avant au véhicule notamment au dossier de siège arrière correspondant, lorsqu'ils sont en position de recouvrement.

Lorsque l'élément de recouvrement 7 est sous forme de panneau, il peut être prévu que ledit panneau soit solidaire d'un moyen de contrainte élastique qui tende à le maintenir en position étendue, ce qui évite de disposer des moyens d'association 8.

Le bord avant de chaque rideau est associé à une tige de rigidification 11, les moyens d'association 8 de chaque rideau étant solidaires de ladite tige.

La structure 5 forme boîte de rangement des volets, un couvercle 10 étant prévu de sorte à fermer ladite boîte.

De façon non représentée, le couvercle 10 peut être formé par un des volets 2.

## Revendications

1. Ensemble (1) de recouvrement des bagages d'un véhicule automobile, ledit ensemble comprenant :
• une structure (5) médiane, ladite structure comprenant des moyens de fixation (6) au véhicule,
• une pluralité de volets (2) montés successivement en articulation transversale (3) les uns par rapport aux autres de sorte à pouvoir être disposés entre une configuration repliée de rangement et une configuration déployée d'utilisation, le bord avant (4) du volet avant étant solidaire de ladite structure,
• au moins un élément de recouvrement (7), associé à l'avant de ladite structure par l'intermédiaire d'un dispositif d'escamotage (9), de sorte à pouvoir être disposé entre une position escamotée et une position étendue de recouvrement.

2. Ensemble selon la revendication 1, ledit ensemble comprenant une pluralité d'éléments de recouvrement (7) disposés de façon contiguë le long de la structure (5), et associés à autant de dispositifs d'escamotage (9), de sorte que lesdits éléments puissent être étendus de façon individuelle tout en assurant un recouvrement complet de l'espace à recouvrir.

3. Ensemble selon la revendication 1 ou 2, au moins un élément de recouvrement (7) étant sous forme d'un rideau (7a).

4. Ensemble selon la revendication 3, au moins un rideau (7a) étant associé à un moyen d'enroulement (9a) formant dispositif d'escamotage (9).

5. Ensemble selon la revendication 4, lorsqu'elle dépend de la revendication 2, les moyens d'enroulement (9a) des rideaux (7a) étant logés dans un carter commun (12) associé à la structure (5).

6. Ensemble selon la revendication 3, au moins un rideau (7a) étant associé à un moyen de pliage formant dispositif d'escamotage (9).

7. Ensemble selon la revendication 1 ou 2, au moins un élément de recouvrement (7) étant sous forme d'un panneau rigide, ledit panneau étant monté sur la structure (5) par des moyens de coulissement, ou selon un axe d'articulation transversal, formant dispositif d'escamotage (9).

8. Ensemble selon l'une quelconque des revendications 1 à 7, au moins un élément de recouvrement (7) comprenant des moyens d'association (8) de son bord avant au véhicule lorsqu'il est en position de recouvrement.

9. Ensemble selon la revendication 8, lorsqu'elle dépend des revendications 3 à 6, le bord avant de chaque rideau étant associé à une tige de rigidification (11), les moyens d'association (8) de chacun desdits rideaux étant solidaires de ladite tige.

10. Ensemble selon l'une quelconque des revendications 1 à 9, la structure (5) formant boite de rangement des volets (2), un couvercle (10) étant prévu de sorte à fermer ladite boîte.
